# EUROPÄISCHE PATENTSCHRIFT

(11) **EP 2 577 101 B1**
(45) Veröffentlichungstag und Bekanntmachung des Hinweises auf die Patenterteilung: **30.07.2014**
(21) Anmeldenummer: 11718700.5
(22) Anmeldetag: 02.05.2011
(51) Int. Cl.: F16H 25/22

(54) **MUTTER EINES PLANETENWÄLZGEWINDETRIEBES UND VERFAHREN ZUR HERSTELLUNG EINER SOLCHEN MUTTER**
NUT OF A PLANETARY ROLLER SCREW DRIVE, AND METHOD FOR PRODUCING SUCH A NUT
ÉCROU D'UNE VIS D'ENTRAÎNEMENT À ROULEMENT PLANÉTAIRE ET SON PROCÉDÉ DE PRODUCTION

(30) Priorität: 07.06.2010 DE 102010022893
(43) Veröffentlichungstag der Anmeldung: 10.04.2013
(73) Patentinhaber: Schaeffler Technologies GmbH & Co. KG, 91074 Herzogenaurach (DE)
(72) Erfinder: KURZ, Michael, 57290 Bliesbruck (DE); RUDY, Dietmar, 66501 Kleinbundenbach (DE); KLEBER, Rainer, 66386 St. Ingbert (DE); MOTZ, Thomas, 91074 Herzogenaurach (DE); GREDY, Horst, 91097 Oberreichenbach (DE); DOHR, Matthias, 91085 Weisendorf (DE)
(86) Internationale Anmeldenummer: PCT/EP2011/056898
(87) Internationale Veröffentlichungsnummer: WO 2011/154199

(56) Entgegenhaltungen:
- EP-A1- 0 331 761
- CH-A- 428 337
- DE-A1- 19 646 339
- DE-B3-102008 008 013

## Beschreibung

Die vorliegende Erfindung bezieht sich auf eine Mutter eines Planetenwälzgewindetriebes. Bei derartigen Planetenwälzgewindetrieben ist üblicherweise eine Spindelmutter auf einer Gewindespindel angeordnet, wobei in einem von der Spindelmutter und der Gewindespindel begrenzten Ringspalt über den Umfang verteilt angeordnete Planeten einerseits in Wälzeingriff mit der Gewindespindel und andererseits in Wälzeingriff mit der Spindelmutter stehen. Wenn die Spindelmutter und die Gewindespindel relativ zueinander verdreht werden, wird diese Relativdrehung in eine axiale Relativverschiebung zwischen der Gewindespindel und der Spindelmutter umgewandelt. In den axialen Richtungen ist bei Planetenwälzgewindetrieben aufgrund des Wälzeingriffs der Planeten eine formschlüssige Verbindung hergestellt. Ohne Relativdrehungen zwischen der Spindelmutter und der Gewindespindel erfolgt keine axiale Relativverschiebung.

Aus DE 10 2008 008013 B3 bspw. ist ein Planetenwälzgewindetrieb bekannt geworden, dessen Mutter am Innenumfang an ihren beiden axialen Enden jeweils mit einem Rillenprofil versehen ist, wobei Planeten an ihren beiden Enden ebenfalls mit Rillenprofilen versehen sind, und wobei diese Planeten mit ihren Rillenprofilen in die Rillenprofile der Mutter eingreifen.

Das eine an der Mutter ausgebildete Rillenprofil für das eine Ende der Planeten und das andere Rillenprofil für das andere Ende der Planeten sind an einem gemeinsamen Mutternteil ausgebildet und somit in einem festgelegten Abstand zueinander angeordnet. Dieser Abstand ist einwandfrei auf die Planeten abgestimmt, so dass die Planeten mit ihren endseitig vorgesehenen Rillenprofilen einwandfrei in die endseitig vorgesehenen Rillenprofile der Mutter eingreifen. Der axiale Abstand der beiden an der Mutter vorgesehenen Rillenprofile ist bei einer derartigen Mutter eingefroren; das bedeutet, es ist nicht vorgesehen, dass eine Lageveränderung der beiden Rillenprofile zueinander möglich sein soll.

Das Rillenprofil bei diesen bekannten oder erfindungsgemäßen Planetenwälzgewindetrieben kann aus einer Vielzahl von axial hintereinander angeordneten Rillen bestehen, die - wie im Fall der eingangs genannten Druckschrift - umfangsseitig ringförmig geschlossen und parallel zueinander angeordnet sind, wobei diese Rillen in einer quer zu der Planetenachse und der Mutterachse angeordneten Ebene liegen können. Zwei einander benachbart angeordnete Rillen können durch einen gemeinsamen Rillensteg begrenzt sein. Im Wälzeingriff der Planeten mit der Mutter greifen die Rillenstege der Planeten in die Rillen der Mutter ein und die Rillenstege der Mutter greifen in die Rillen der Planeten ein. In anderen Worten ausgedrückt: die Rillenprofile der Planeten und der Mutter greifen ineinander ein.

Zwischen den beiden Rillenprofilen der Mutter ist ein Freiraum vorgesehen, in den die Planeten mit einem radial vergrößerten Mittelabschnitt ohne Kontakt zu der Mutter eingreifen. Derartige Muttern können bspw. in einem spangebenden Verfahren hergestellt werden. So ist es möglich, sowohl die endseitig vorgesehenen Rillenprofile als auch den Freiraum mit einem Innendrehmeißel herzustellen. Eine derartige spangebende Bearbeitung ist jedoch aufwändig.

Aus der CH 428 337 ist eine Mutter nach dem Oberbegriff des Anspruchs 1.

Aufgabe der Erfindung war es, eine Mutter eines Planetenwälzgewindetriebes nach den Merkmalen des Oberbegriffs des Anspruchs 1 anzugeben, die einfach herstellbar ist.

Erfindungsgemäß wurde diese Aufgabe durch die Mutter gemäß Anspruch 1 gelöst. Dadurch, dass eine aus Blech durch Umformung hergestellte Hülse vorgesehen ist, in der zwei in axialer Richtung in festgelegtem Abstand zueinander angeordnete Ringe vorgesehen sind, wobei der eine Ring das eine Rillenprofil und der andere Ring das andere Rillenprofil aufweist, ergeben sich zahlreiche Vorteile.

Zum einen kann auf eine spangebende Bearbeitung weitgehend oder vollständig verzichtet werden. Bspw. können die Ringe in einem Ringwalzverfahren mit den Rillenprofilen versehen werden. An diesem Ring erstreckt sich das Rillenprofil über eine Teilbreite des Ringes, wobei die gesamte Breite des Ringes etwa 1,5 fache dieser Teilbreite oder weniger beträgt. Das bedeutet, dass zwischen der letzten Rille des Rillenprofils und der benachbarten Kante des Ringes ein lediglich geringfügiger Abstand verbleibt. Auf diese Weise kann sichergestellt werden, dass während des Rollierens das Material des Rings ausreichend fließen kann.

Ebenso kann die Hülse in wirtschaftlich günstiger Weise aus Blech bspw. im Tiefziehverfahren hergestellt werden. Gegebenenfalls können an diese Hülse Radialborde ebenfalls in einem spanlosen Umformverfahren angeformt werden. Diese Radialborde können als Stützlager für die beiden Ringe ausgebildet sein.

Erfindungsgemäße Muttern sind besonders für Anwendungen geeignet, in denen eine Aufnahmebohrung zur Aufnahme der erfindungsgemäßen Mutter bereitgestellt ist. Üblicherweise sind derartige Aufnahmebohrungen an massiven Maschinenteilen ausgebildet. Selbst wenn die Hülse der erfindungsgemäßen Mutter aus einem sehr dünnen Blech gebildet ist und möglicherweise allein nicht die erforderliche Steifigkeit für einen einwandfreien Betrieb des Planetenwälzgewindetriebes aufweist, ist jedenfalls nach dem Einfügen der Mutter in die Aufnahmebohrung ein einwandfreier Betrieb gewährleistet, weil sich die elastisch verformbare dünnwandige Hülse an die Kontur der Aufnahmebohrung anpasst und die Steifigkeit des tragenden Maschinenteiles nutzt.

Zum anderen genügt es, die beiden mit den Rillenprofilen versehenen Ringe in der Hülse anzuordnen und so zueinander zu positionieren, dass der oben zum Stand der Technik erläuterte festgelegte Abstand zwischen den beiden Rillenprofilen eingestellt ist, damit ein einwandfreier Eingriff der Planeten mit der Mutter sichergestellt ist.

Der festgelegte Abstand wird dadurch erzielt, dass für jeden Ring ein Stützlager vorgesehen ist. Das bedeutet, dass die beiden Ringe an den zugeordneten Stützlagern axial abgestützt und in dem festgelegten Abstand zueinander gehalten werden, so dass ein einwandfreies Abwälzen der Planeten an der Mutter sichergestellt ist. Bei der erfindungsgemäßen Mutter sind die beiden Ringe in den axialen Richtungen unverschieblich zueinander angeordnet, eine axiale Relativverschiebung zwischen den Ringen ist nicht vorgesehen.

Die Stützlager können bei einer erfindungsgemäßen Weiterbildung durch ein Distanzstück gebildet sein, das zwischen den beiden Ringen angeordnet ist. In diesem Fall kann es genügen, die beiden Ringe zur Anlage an die stirnseitigen Enden des Distanzstückes zu bringen, um den erwähnten festgelegten Abstand bereitzustellen.

Als Distanzstück bietet sich insbesondere eine Distanzhülse an, die in dem von der Gewindespindel und der Gewindemutter gebildeten Ringraum angeordnet ist.

Im Fall der Distanzhülse können deren Stirnflächen jeweils als Stützlager ausgebildet sein. In diesem Fall kann es zweckmäßig sein, sicherzustellen, dass die beiden Stirnflächen einwandfrei plan und parallel zueinander angeordnet sind, so dass diese Distanzhülse in einer beliebigen Drehlage in der Hülse angeordnet werden kann.

Für ein einwandfreies Zusammenspiel der Ringe mit den Stützlagern sieht eine erfindungsgemäße Weiterbildung vor, dass die Ringe an ihren einander zugewandten Stirnseiten mit Lagerflächen zur Anlage an die Stützlager versehen sind. Das an dem Ring ausgebildete Rillenprofil und die Lagerfläche sind vorzugsweise mit sehr geringen Toleranzen zueinander positioniert, so dass mit der Anlage der Lagerfläche an dem zugeordneten Stützlager der festglegte Abstand der beiden Ringe zueinander einwandfrei eingestellt ist.

Für eine einwandfreie Positionierung der Ringe zueinander sieht eine erfindungsgemäße Weiterbildung vor, dass die Hülse an ihren beiden Enden jeweils mit einem spanlos angeformten, radial einwärts gerichteten Radialbord versehen ist. Diese Radialborde dienen demzufolge als Stützlager für die Ringe.

Eine erfindungsgemäße Mutter kann dadurch hergestellt werden, dass die beiden Ringe in der Hülse so angeordnet werden, dass die Lagerflächen der Ringe an zwischen den beiden Ringen vorgesehenen Stützlagern anliegen, wobei die Hülse an ihrem einen axialen Ende den benachbarten Ring axial überragt. Nun kann dieses überragende Ende der Hülse radial einwärts zur Bildung des Radialbords umgeformt werden. Bei dieser erfindungsgemäßen Weiterbildung sind die beiden Ringe in den axialen Richtungen an den zwischen den beiden Ringen vorgesehenen Stützlagern sowie an den beiden Radialborden einwandfrei positioniert und in festgelegtem axialen Abstand zueinander gehalten.

Erfindungsgemäß ist die Hülse an ihrem Innenumfang mit spanlos angeformten Stützlagern versehen. Diese Stützlager können bspw. an die Hülse anrolliert werden. Es genügt, Material der Hülse nach innen zu drücken, so dass am Innenumfang die Stützlager bereitgestellt sind.

Bei einer erfindungsgemäßen Weiterbildung kann es zweckmäßig sein, wenn die Hülse zwischen den beiden Ringen durch einen spanlos angeformten, nach radial innen vorspringenden Ringabschnitt eingeschnürt ist, dessen beide axiale Stirnseiten Stützlager für die beiden Ringe bilden.

Bei einer anderen erfindungsgemäßen Weiterbildung können die beiden Ringe an ihrem Außenumfang jeweils mit einer Nut, insbesondere umlaufenden Ringnut versehen sein, in die an die Hülse spanlos angeformte, radial einwärts vorstehende Sicken eingreifen. Diese Sicken bilden demzufolge Stützlager für die Ringe in beiden axialen Richtungen.

Bei dieser zuletzt genannten Variante kann eine erfindungsgemäße Mutter in besonders einfacher Weise bereitgestellt werden: die beiden Ringe werden in der Hülse mit dem vorgesehenen axialen Abstand zueinander angeordnet und gehalten, anschließend werden die Sicken in die Hülse und somit in die Nuten der Ringe eingeformt. Unter diesem Einformen wird Werkstoff der Hülse in die Nuten gedrängt.

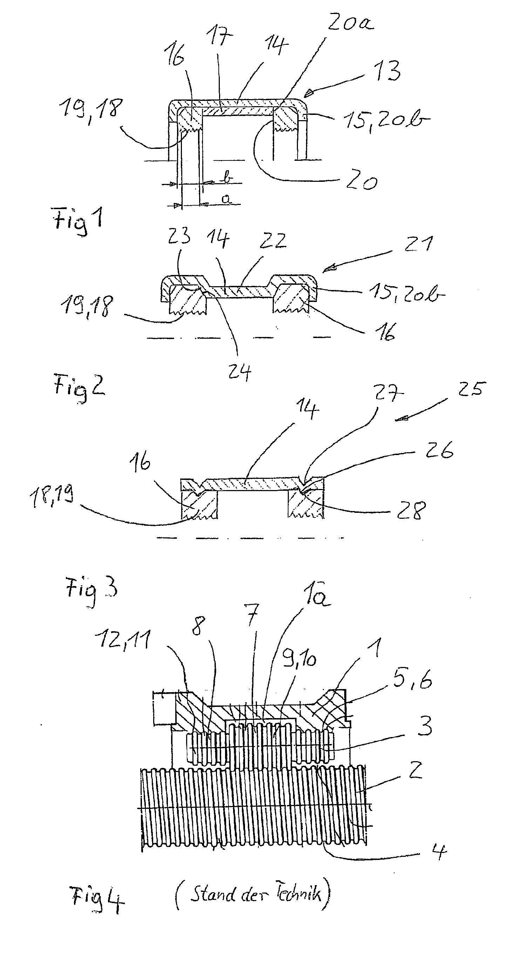

Nachstehend wird die Erfindung anhand von drei in insgesamt vier Figuren abgebildeten Ausführungsbeispielen näher erläutert, wobei Figur 4 einen herkömmlichen Planetenwälzgewindetrieb zeigt. Es zeigen:
- Figur 1: eine erfindungsgemäße Mutter im Längsschnitt,
- Figur 2: eine weitere erfindungsgemäße Mutter im Längsschnitt,
- Figur 3: eine weitere erfindungsgemäße Mutter im Längsschnitt und
- Figur 4: einen herkömmlichen Planetenwälzgewindetrieb im Längsschnitt.

Unter Bezug auf Figur 4 wird zunächst der Aufbau eines herkömmlichen Planetenwälzgewindetriebes beschrieben, soweit es für das Verständnis der Erfindung zweckdienlich ist.

Bei diesem Planetenwälzgewindetrieb ist eine Mutter 1 auf einer Gewindespindel 2 unter Zwischenschaltung von Planeten 3 angeordnet. Die Gewindespindel 2 ist mit einem schraubenförmigen Gewinde 4 versehen. Die Mutter 1 ist an ihrem Innenumfang mit zwei Rillenprofilen 5 versehen, die jeweils aus einer Vielzahl von Rillen 6 gebildet sind. Die Rillen 6 sind ringförmig geschlossen und parallel zueinander in einer quer zur Achse der Mutter 1 gelegenen Ebene angeordnet.

Die Planeten 3 weisen einen Mittelabschnitt 7 auf, sowie zu beiden axialen Seiten des Mittelabschnitts 7 gelegene, gegenüber dem Mittelabschnitt 7 radial abgesetzte Endabschnitte 8. Der Mittelabschnitt 7 ist an seinem Außenumfang mit einem Rillenprofil 9 versehen, das aus einer Vielzahl von Rillen 10 gebildet ist. Die Rillen 10 sind ringförmig geschlossen und parallel zueinander in einer quer zur Achse des Planeten 3 gelegenen Ebene angeordnet. Die beiden Endabschnitte 8 sind an ihrem Außenumfang jeweils mit einem Rillenprofil 11 versehen, das aus einer Vielzahl von Rillen 12 gebildet ist. Diese Rillen 12 sind ringförmig geschlossen und parallel zueinander in einer quer zur Achse des Planeten 3 gelegenen Ebene angeordnet. Die Planeten 3 und die Mutter 1 sind mit ihren Rillenprofilen 5,11 in Wälzeingriff miteinander.

Zwischen den beiden Rillenprofilen 11 der Mutter 1 ist eine ringförmig um die Achse der Mutter 1 herum angeordnete Ausnehmung 1 a vorgesehen, in die die Planeten 3 mit dem Mittelabschnitt 7 ohne Kontakt zur Mutter 1 eingreifen.

Die Planeten 3 greifen mit dem Rillenprofil 9 in das Gewinde 4 der Gewindespindel 2 ein. Unter Relativdrehung zwischen der Mutter 1 und der Gewindespindel 2 rotieren die Planeten 3 um die Planetenachse sowie um die Gewindespindelachse.

Die in den Figuren 1-3 abgebildeten erfindungsgemäßen Muttern können für Planetenwälzgewindetriebe gemäß Figur 4 eingesetzt werden, wobei die Mutter 1 durch erfindungsgemäße Muttern ersetzt werden kann.

Bei dem ersten erfindungsgemäßen Ausführungsbeispiel nach Figur 1 ist eine Mutter 13 vorgesehen, die eine aus dünnwandigem Blech durch Umformen hergestellte Hülse 14 aufweist, deren Enden jeweils mit einem radial einwärts gerichteten Radialbord 15 versehen sind. Diese Radialborde 15 sind ebenfalls in einem spanlosen Umformverfahren angeformt.

In der Hülse 14 sind zwei Ringe 16 axial hintereinander unter Zwischenschaltung einer Distanzhülse 17 angeordnet. Die beiden Ringe 16 sind im Ausführungsbeispiel spielfrei zwischen der Distanzhülse 17 und dem jeweils benachbarten Radialbord 15 gehalten. Jeder Ring 16 ist an seinem Innenumfang mit einem Rillenprofil 18 versehen. Das Rillenprofil 18 ist durch eine Vielzahl von ringförmig geschlossenen Rillen 19 gebildet, die parallel zueinander in einer quer zur Achse der Mutter 1 gelegenen Ebene angeordnet sind.

An ihren einander zugewandten Seiten sind die beiden Ringe 16 jeweils mit einer Lagerfläche 20 versehen, die im Ausführungsbeispiel parallel zueinander und in einer quer zur Achse der Mutter 1 gelegenen Ebene angeordnet sind. Die Distanzhülse 17 ist an ihren Enden jeweils als Stützlager 20a für die Ringe 16 ausgebildet. Im Ausführungsbeispiel liegen die Ringe 16 mit ihren Lagerflächen 20 plan an den Stirnflächen der Distanzhülse 17 an.

Eine Ringbreite b des Ringes 16 beträgt höchstens das 1,5 fache einer Teilbreite a, wobei die Teilbreite a die axiale Erstreckung des Rillenprofils 18 angibt. Das Rillenprofil 18 des Rings 16 ist im Ausführungsbeispiel in einem Rollierverfahren hergestellt. Das hier beschriebene Verhältnis der Ringbreite zu der Teilbreite ermöglicht ein für Walzverfahren günstiges Fließen des Werkstoffes des Ringes 16.

Die Lage des Rillenprofils 18 zur Lagerfläche 20 ist eng toleriert, im Ausführungsbeispiel ist eine Rille 19 des Rillenprofils 18 in axialer Richtung auf 1/100 mm genau gegenüber der Lagerfläche 20 toleriert. Bei derart hochgenau gefertigten Ringen kann die Distanzhülse 17 mit sehr engen axialen Toleranzen bereitgestellt werden, so dass die Mutter 13 nach dem Zusammenbau der einzelnen Bestandteile für einen einwandfreien Eingriff der Planeten bereitgestellt ist.

Bei diesem Ausführungsbeispiel kann die Mutter 13 in der Weise hergestellt werden, dass zunächst die Hülse 14 an nur einem axialen Ende mit einem Radialbord 15 versehen wird. Anschließend können die beiden Ringe 16 mit der zwischengeschalteten Distanzhülse 17 in die Hülse von deren offenen Seite her eingeführt werden. Anschließend kann mit einem geeigneten Werkzeug der axial überstehende Teil der Hülse 14 zu dem Radialbord 15 umgeformt werden, so dass die erfindungsgemäße Mutter 13 bereitgestellt ist. Die Radialborde 15 der Hülse 10 bilden Stützlager 20b für die Ringe 16. Im Ausführungsbeispiel sind die Ringe 16 in beiden axialen Richtungen durch die Stützlager einwandfrei zueinander positioniert und in festgelegtem Abstand zueinander angeordnet.

Die erfindungsgemäße Mutter 21 aus Figur 2 unterscheidet sich von der Mutter 13 aus Figur 1 im Wesentlichen dadurch, dass die Distanzhülse durch einen radial eingeschnürten Ringabschnitt 22 der Hülse 14 ersetzt ist. Dieser Ringabschnitt 22 kann bspw. mit einem Rollierwerkzeug ein die Hülse 14 anrolliert werden. Im Ausführungsbeispiel sind die beiden Stirnseiten des Ringabschnitts 22 jeweils als Stützlager 23 für die Ringe 16 ausgebildet. Im Ausführungsbeispiel ist das Stützlager 23 durch eine zur Achse der Mutter geneigt angeordnete Kegelfläche gebildet. Die beiden Ringe 16 sind an ihren einander zugewandten Stirnseiten jeweils mit einer kegeligen Lagerfläche 24 versehen, die plan an dem Stützlager 23 anliegt.

Diese erfindungsgemäße Mutter 21 kann wie folgt hergestellt werden: in Kenntnis der genauen Abmessungen der beiden Ringe 16 kann an der Hülse 14 der eingeschnürte Ringabschnitt 22 mittels Anrollieren hergestellt werden. Dieser Rolliervorgang erfolgt derart, dass die beiden durch die Kegelflächen gebildeten Stützlager 23 einen bestimmten Abstand zueinander aufweisen. Nun können die beiden Ringe von beiden axialen Seiten in die Hülse 14 eingeführt bis zu den Stützlagern 23 eingeführt werden. Anschließend können die axial überstehenden Abschnitte der Hülse 14 mit einem geeigneten Werkzeug zu den Radialborden 15 umgeformt werden, so dass die beiden Ringe 16 zwischen den Radialborden 15 und den Stützlagern 23 spielfrei angeordnet sind.

Die in der Figur 3 abgebildete erfindungsgemäße Mutter 25 unterscheidet sich von der Mutter gemäß Figur 2 durch die folgenden Merkmale: die beiden Ringe 16 sind an ihrem Außenumfang jeweils mit einer ringförmigen Nut 26 versehen. Die Hülse 14 ist an ihrem Außenumfang mit zwei ringförmig ausgeführten Sicken 27 versehen, die in einem Umformprozess in die Hülse 14 eingeformt sind. Durch diesen Umformprozess verdrängter Werkstoff der Hülse 14 greift in die ringförmigen Nuten 26 der Ringe 16 ein, so dass die beiden Ringe 16 in beiden axialen Richtungen einwandfrei an der Hülse 14 gehalten sind. Radialflansche entfallen bei dieser erfindungsgemäßen Weiterbildung.

Bei diesem Ausführungsbeispiel können die beiden mit den ringförmigen Nuten 26 versehenen Ringe 16 in die Hülse 14 eingeführt werden. Mit Hilfe einer geeigneten Lehre können die beiden Ringe zueinander derart positioniert werden, dass der vorgesehene festgelegte Abstand für einen einwandfreien Eingriff der Planeten gewährleistet ist. In dieser Lage kann die Hülse 14 mit einem geeigneten Werkzeug derart umgeformt werden, dass die Sicken 27 hergestellt sind, wobei der verdrängte Werkstoff der Hülse 14 in die ringförmigen Nuten 26 der Ringe 16 eingreift. Die in die ringförmigen Nuten 26 hineingeformten Sicken 27 bilden Stützlager 28 für die Ringe 16, so dass die Ringe in beiden axialen Richtungen einwandfrei in der Hülse in einem festgelegten Abstand zueinander angeordnet sind.

Die in den Ausführungsbeispielen beschriebenen Ringe können spanend hart gedreht oder spanend geschliffen sein, wobei das Rillenprofil mittels eines üblichen Ringwalzverfahrens bereitgestellt werden kann. Die Ringe können als Präzisionsrohlinge bezüglich Außen- und Innendurchmesser günstig hergestellt werden, wobei ein Innendurchmesser kalibriert werden kann, und wobei ein Außendurchmesser Centerless geschliffen sein kann.

Insbesondere bei den Ausführungsbeispielen gemäß den Figuren 1 und 2 sind erfinderische Abwandlungen denkbar, bei denen einer der beiden Ringe mit axialem Spiel gegenüber der Hülse angeordnet ist. Auf diese Weise sind Planetenwälzgewindetrieben herstellbar, bei denen es auf eine genaue Positionierung der beiden Ringe zueinander in lediglich geringerem Umfang ankommt; denn dieser spielbehaftete Ring kann in seine Eingriffsposition mit dem zugeordneten Rillenprofil des Planeten verschoben werden.

### Bezugszeichenliste

- 1: Mutter
- 1a: Ausnehmung
- 2: Gewindespindel
- 3: Planeten
- 4: Gewinde
- 5: Rillenprofil
- 6: Rille
- 7: Mittelabschnitt
- 8: Endabschnitt
- 9: Rillenprofil
- 10: Rille
- 11: Rillenprofil
- 12: Rille
- 13: Mutter
- 14: Hülse
- 15: Radialbord
- 16: Ring
- 17: Distanzhülse
- 18: Rillenprofil
- 19: Hülse
- 20: Lagerfläche
- 20a: Stützlager
- 20b: Stützlager
- 21: Mutter
- 22: Ringabschnitt
- 23: Stützlager
- 24: Lagerfläche
- 25: Mutter
- 26: Nut
- 27: Sicke
- 28: Stützlager

## Patentansprüche

1. Mutter (13, 21, 25) eines Planetenwälzgewindetriebes, an deren Innenumfang mehrere über den Umfang verteilt angeordnete Planeten (3) mit ihren beiden Enden an Rillenprofilen (18) der Mutter (13, 21, 25) abwälzbar sind, wobei das eine Rillenprofil (18) für das eine Ende der Planeten (3) und das andere Rillenprofil (18) für das andere Ende der Planeten (3) in axialer Richtung in einem festgelegten Abstand zueinander angeordnet sind, wobei eine Hülse (14) vorgesehen ist, in der zwei in axialer Richtung in festgelegtem Abstand zueinander angeordnete Ringe (16) vorgesehen sind, wobei der eine Ring (16) das eine Rillenprofil (18) und der andere Ring (16) das andere Rillenprofil (18) aufweist, **dadurch gekennzeichnet, dass** die aus Blech durch Umformen hergestellte Hülse (14) an ihrem Innenumfang mit spanlos angeformten Stützlagern (20b, 23, 28) für die Ringe (16) versehen ist.

2. Mutter (13) nach Anspruch 1, bei der zwischen den beiden Ringen (16) ein insbesondere als Distanzhülse (17) ausgebildetes Distanzstück angeordnet ist, dessen axiale Enden als Stützlager (20a) für die Ringe (16) ausgebildet sind.

3. Mutter (13) nach Anspruch 2, bei der die Ringe (16) an ihren einander zugewandten Stirnseiten mit Lagerflächen (20) zur Anlage an die durch die axialen Enden des Distanzstückes gebildeten Stützlager (20a) versehen sind.

4. Mutter (13, 21, 25) nach Anspruch 1, bei der sich das Rillenprofil (18) jedes Ringes (16) über eine Teilbreite (a) des Ringes (16) erstreckt, wobei eine Ringbreite (b) etwa das 1,5-fache der Teilbreite (a) oder weniger beträgt.

5. Mutter (21) nach Anspruch 1, bei der die Hülse (14) zwischen den beiden Ringen (16) mit einem spanlos angeformten, nach radial innen vorspringenden Ringabschnitt (22) versehen ist, dessen beide axiale Stirnseiten die Stützlager (23) bilden.

6. Mutter (25) nach Anspruch 1, bei der die beiden Ringe (16) an ihrem Außenumfang jeweils mit einer Nut (26) versehen sind, in die an der Hülse (14) spanlos angeformte, radial einwärts vorstehende, die Stützlager (28) bildende Si-cken (27) eingreifen.

7. Mutter (13, 21) nach Anspruch 1 oder 5, bei der die Hülse (14) an ihren beiden Enden mit spanlos angeformten, radial einwärts gerichteten Radialborden (15) versehen ist.

8. Mutter (13, 21) nach Anspruch 7, deren Radialborde (15) die Stützlager (20b) bilden.

9. Verfahren zur Herstellung einer Mutter (21) nach den Ansprüchen 5 und 7 nach den folgenden Schritten: die beiden Ringe (16) werden in der Hülse (14) angeordnet, so dass die Lagerflächen (24) der Ringe (16) an den Stützlagern (23) anliegen, wobei die Hülse (14) an wenigstens einem axialen Ende den benachbarten Ring (16) axial überragt, wobei das überragende Ende der Hülse (14) radial einwärts zur Bildung des Radialbords (15) umgeformt wird.

10. Verfahren zur Herstellung einer Mutter (25) nach Anspruch 6, nach den folgenden Schritten: die Ringe (16) werden in der Hülse (14) mit dem vorgesehenen Abstand zueinander angeordnet und gehalten, anschließend werden die Sicken (27) in die Hülse (14) und somit in die Nuten (26) der Ringe (16) eingeformt.

## Claims

1. Nut (13, 21, 25) of a planetary roller screw drive, on the inner circumference of which nut a plurality of planets (3) arranged so as to be distributed over the circumference can roll with their two ends on groove profiles (18) of the nut (13, 21, 25), one groove profile (18) for one end of the planets (3) and the other groove profile (18) for the other end of the planets (3) being arranged at a fixed distance from one another in the axial direction, a sleeve (14) being provided, in which two rings (16) arranged at a fixed distance from one another in the axial direction are provided, one ring (16) having one groove profile (18) and the other ring (16) having the other groove profile (18), **characterized in that** the sleeve (14), produced from sheet metal by forming, is provided on its inner circumference with supporting bearings (20b, 23, 28), integrally formed in a non-cutting manner, for the rings (16).

2. Nut (13) according to Claim 1, in which there is arranged between the two rings (16) a spacer piece which is formed, in particular, as a spacer sleeve (17) and the axial ends of which are designed as supporting bearings (20a) for the rings (16).

3. Nut (13) according to Claim 2, in which the rings (16) are provided on their end faces confronting one another with bearing surfaces (20) for bearing against the supporting bearings (20a) formed by the axial ends of the spacer piece.

4. Nut (13, 21, 25) according to Claim 1, in which the groove profile (18) of each ring (16) extends over a part-width (a) of the ring (16), a ring width (b) amounting to about 1.5 times the part-width (a) or less.

5. Nut (21) according to Claim 1, in which the sleeve (14) is provided between the two rings (16) with a radially inward-projecting ring portion (22) which is integrally formed in a non-cutting manner and the two axial end faces of which form the supporting bearings (23).

6. Nut (25) according to Claim 1, in which the two rings (16) are provided on their outer circumference in each case with a slot (26), into which engage radially inward-protruding beads (27) which are integrally formed in a non-cutting manner on the sleeve (14) and which form the supporting bearings (28).

7. Nut (13, 21) according to Claim 1 or 5, in which the sleeve (14) is provided at its two ends with radially inward-directed radial rims (15) integrally formed in a non-cutting manner.

8. Nut (13, 21) according to Claim 7, the radial rims (15) of which form the supporting bearings (20b).

9. Method for producing a nut (21) according to Claims 5 and 7 by the following steps: the two rings (16) are arranged in the sleeve (14), so that the bearing surfaces (24) of the rings (16) bear against the supporting bearings (23), the sleeve (14) jutting out axially beyond the adjacent ring (16) at at least one axial end, the jutting-out end of the sleeve (14) being formed radially inwards to produce the radial rim (15).

10. Method for producing a nut (25) according to Claim 6 by the following steps: the rings (16) are arranged and held in the sleeve (14) at the intended distance from one another, and the beads (27) are subsequently formed into the sleeve (14) and thus into the slots (26) of the rings (16).

## Revendications

1. Écrou (13, 21, 25) d'une vis d'entraînement à roulement planétaire, sur la périphérie interne duquel peuvent rouler plusieurs satellites répartis sur la périphérie (3), avec leurs deux extrémités sur des profils de gorge (18) de l'écrou (13, 21, 25), l'un des profils de gorge (18) pour une extrémité des satellites (3) et l'autre profil de gorge (18) pour l'autre extrémité des satellites (3) étant disposés dans la direction axiale à une distance fixe l'un par rapport à l'autre, une douille (14) étant prévue, dans laquelle sont prévues deux bagues (16) disposées dans la direction axiale à une distance fixe l'une par rapport à l'autre, l'une des bagues (16) présentant l'un des profils de gorge (18) et l'autre bague (16) présentant l'autre profil de gorge (18), **caractérisé en ce que** la douille (14) fabriquée en tôle par formage est munie sur sa périphérie interne de paliers de support façonnés sans enlèvement de copeaux (20b, 23, 28) pour les bagues (16).

2. Écrou (13) selon la revendication 1, dans lequel, entre les deux bagues (16), est disposé un élément d'espacement réalisé notamment sous forme de douille d'espacement (17), dont les extrémités axiales sont réalisées sous forme de palier de support (20a) pour les bagues (16).

3. Écrou (13) selon la revendication 2, dans lequel les bagues (16) sont pourvues, au niveau de leurs côtés frontaux tournés l'un vers l'autre, de faces de palier (20) pour l'application contre les paliers de support (20a) formés par les extrémités axiales de l'élément d'espacement.

4. Écrou (13, 21, 25) selon la revendication 1, dans lequel le profil de gorge (18) de chaque bague (16) s'étend sur une largeur partielle (a) de la bague (16), une largeur de bague (b) mesurant approximativement 1,5 fois la largeur partielle (a) ou moins.

5. Écrou (21) selon la revendication 1, dans lequel la douille (14) entre les deux bagues (16) est pourvue d'une portion annulaire (22) façonnée sans enlèvement de copeaux, faisant saillie radialement vers l'intérieur, dont les deux côtés frontaux axiaux forment les paliers de support (23).

6. Écrou (25) selon la revendication 1, dans lequel les deux bagues (16) sont pourvues, au niveau de leur périphérie extérieure, à chaque fois d'une rainure (26), dans laquelle s'engagent des moulures (27) faisant saillie radialement vers l'intérieur, formant les paliers de support (28), façonnées sans enlèvement de copeaux sur la douille (14).

7. Écrou (13, 21) selon la revendication 1 ou 5, dans lequel la douille (14) est pourvue, au niveau de ses deux extrémités, de bords radiaux (15) façonnés sans enlèvement de copeaux, orientés radialement vers l'intérieur.

8. Écrou (13, 21) selon la revendication 7, dont les bords radiaux (15) forment les paliers de support (20b).

9. Procédé de fabrication d'un écrou (21) selon les revendications 5 et 7, comprenant les étapes suivantes : les deux bagues (16) sont disposées dans la douille (14) de telle sorte que les faces de palier (24) des bagues (16) s'appliquent contre les paliers de support (23), la douille (14) faisant saillie axialement au niveau d'au moins une extrémité axiale au-delà de la bague adjacente (16), l'extrémité en saillie de la douille (14) étant déformée radialement vers l'intérieur afin de former le bord radial (15).

10. Procédé de fabrication d'un écrou (25) selon la revendication 6, comprenant les étapes suivantes : les bagues (16) sont disposées et retenues dans la douille (14) avec la distance prévue l'une par rapport à l'autre, puis les moulures (27) sont façonnées dans la douille (14) et ainsi dans les rainures (26) des bagues (16).
